# EUROPEAN PATENT APPLICATION

(11) **EP 1 868 202 A1**
(43) Date of publication of application: **19.12.2007**
(21) Application number: 07108528.6
(22) Date of filing: 21.05.2007
(51) Int. Cl.: G11B 27/034, G11B 27/32

(54) **Information recording apparatus and information playback apparatus**

(30) Priority: 13.06.2006 JP 2006163605
(71) Applicant: Kabushiki Kaisha Toshiba, Minato-ku, Tokyo 105-8001 (JP)
(72) Inventor: Shibutani, Manabu Toshiba Corporation Intellectual Property Division, Tokyo 105-8001 (JP)
(74) Representative: Henkel, Feiler & Hänzel

(57) **Abstract**

According to one embodiment, an information recording apparatus which converts an HD DVD Video Recording (HD DVD-VR) content recorded based on the HD DVD-VR format into an interoperable content compatible with the HD DVD-Video format, and records the interoperable content, includes an analysis unit (1, 2) configured to analyze navigation data included in the HD DVD-VR content, a generation unit (3, 4) configured to generate a playlist file and a video title set information file based on the navigation data, and to generate the interoperable content which includes the playlist file, the video title set information file, and a title including video objects included in the HD DVD-VR content, and a recording unit (5) configured to record the interoperable content generated by the generation unit at a predetermined recording location.

## Description

One embodiment of the invention relates to an information recording apparatus for recording data compatible with the format of an HD DVD as a next-generation optical disc. Another embodiment of the invention relates to an information playback apparatus for playing back data compatible with the HD DVD format.

As is known, there are various formats for the existing DVD. For example, the DVD Video format (to be referred to as DVD-Video format hereinafter) and DVD Video Recording format (to be referred to as DVD-VR format hereinafter) are known.

A player compatible with only the DVD-Video format cannot play back video information recorded based on the DVD-VR format. In order to allow the player compatible with only the DVD-Video format to play back the video information recorded based on the DVD-VR format, data conversion is required in advance. That is, the video information recorded based on the DVD-VR format need be converted into that based on the DVD-Video format. Jpn. Pat. Appln. KOKAI Publication No. 2003-199046 discloses a technique for converting video information recorded based on the DVD-VR format into that based on the DVD-Video format.

HD DVD discs as the next-generation optical discs that can support high-definition video recording have that can support high-definition video recording have been standardized with respect to the aforementioned existing DVD formats. The HD DVD format also includes the HD DVD Video format (to be referred to as HD DVD-Video format hereinafter) and HD DVD Video Recording format (to be referred to as HD DVD-VR format hereinafter), and compatibility between these formats is an issue.

It is an object of the invention to provide an information recording apparatus which is excellent to convert an HD DVD-VR content compatible with the HD DVD-VR format into an interoperable content compatible with the HD DVD-Video format and record the interoperable content. It is another object of the invention to provide an information playback apparatus which can play back the interoperable content.

An information recording apparatus according to one aspect of the invention is an information recording apparatus, which converts an HD DVD Video Recording (HD DVD-VR) content recorded in an HD DVD-Video format into an interoperable content compatible with an HD DVD-Video format and records the interoperable content, comprising: an analysis unit configured to analyze navigation data included in the HD DVD-VR content; a generation unit configured to generate a playlist file and a video title set information file based on the navigation data, and to generate the interoperable content which includes the playlist file, the video title set information file, and a title including video objects included in the HD DVD-VR content; and a recording unit configured to record the interoperable content generated by the generation unit at a predetermined recording location, wherein the generation unit generates management information used to manage files for the interoperable content, the recording unit records the management information generated by the generation unit at the predetermined recording location, the navigation data included in the HD DVD-VR content navigates playback of the video objects and stream objects included in the HD DVD-VR content, the playlist file included in the interoperable content indicates the configuration of the title and chapters for the interoperable content, and the video title set information included in the interoperable content indicates attributes of the video objects included in the interoperable content.

An information playback apparatus according to one aspect of the invention comprises: a read unit configured to read a configuration file and management information used to manage files for an interoperable content compatible with an HD DVD-Video format from a predetermined recording location; and a playback unit configured to play back the interoperable content from the predetermined recording location based on the configuration file and the management information read by the read unit.

The invention can be more fully understood from the following detailed description when taken in conjunction with the accompanying drawings, in which:
FIG. 1 is a schematic block diagram showing the arrangement of a recorder (information recording apparatus) for recording an interoperable content and a player (information playback apparatus) for playing back the interoperable content according to an embodiment of the invention;
FIG. 2 is a flowchart showing generation of an interoperable content according to the embodiment;
FIG. 3 is a flowchart showing generation of management information according to the embodiment;
FIG. 4 is a flowchart showing the read processing of the management information according to the embodiment;
FIG. 5 is a flowchart showing a method of preventing wasteful overwrite of files and a method of deleting an unnecessary file according to the embodiment;
FIG. 6 is a view showing the management information according to the embodiment;
FIG. 7 is a flowchart showing the startup sequence by a DVD player according to the embodiment;
FIG. 8 is a view showing the relationship between the HD DVD-VR content and interoperable content according to the embodiment;
FIG. 9 is a table (No. 1) showing an overview of values to be filled in data fields of VTSI for an interoperable content according to the embodiment;
FIG. 10 is a table (No. 2) showing an overview of values to be filled in data fields of VTSI for an interoperable content according to the embodiment;
FIG. 11 is a table (No. 3) showing an overview of values to be filled in data fields of VTSI for an interoperable content according to the embodiment;
FIG. 12 is a view showing conversion from the HD DVD-VR content into the interoperable content according to the embodiment;
FIG. 13 is a table showing an overview of values to be filled in data fields of a configuration file for an interoperable content according to the embodiment;
FIG. 14 shows an example of the configuration of a standard content according to the embodiment;
FIG. 15 shows an example of the configuration of an advanced content according to the embodiment;
FIG. 16 shows a playlist generated based on the HD DVD-VR content according to the embodiment; and
FIG. 17 shows the playlist generated based on the HD DVD-VR content (sequel of FIG. 16) according to the embodiment.

Various embodiments according to the invention will be described hereinafter with reference to the accompanying drawings. In general, according to one embodiment of the invention, an information recording apparatus is an information recording apparatus, which converts an HD DVD Video Recording (HD DVD-VR) content recorded in an HD DVD-VR format into an interoperable content compatible with an HD DVD-Video format and records the interoperable content, comprising: an analysis unit configured to analyze navigation data included in the HD DVD-VR content; a generation unit configured to generate a playlist file and a video title set information file based on the navigation data, and to generate the interoperable content which includes the playlist file, the video title set information file, and a title including video objects included in the HD DVD-VR content; and a recording unit configured to record the interoperable content generated by the generation unit at a predetermined recording location, wherein the generation unit generates management information used to manage files for the interoperable content, the recording unit records the management information generated by the generation unit at the predetermined recording location, the navigation data included in the HD DVD-VR content navigates playback of the video objects and stream objects included in the HD DVD-VR content, the playlist file included in the interoperable content indicates the configuration of the title and chapters for the interoperable content, and the video title set information included in the interoperable content indicates attributes of the video objects included in the interoperable content.

One embodiment of the invention will be described below with reference to the accompanying drawings.

The HD DVD format includes the HD DVD Video format (to be referred to as HD DVD-Video format hereinafter) and HD DVD Video Recording format (to be referred to as HD DVD-VR format hereinafter). An HD DVD-Video player cannot play back an HD DVD-VR content recorded based on the HD DVD-VR format intact. To solve this problem, an HD DVD-VR recorder that supports the HD DVD-VR format can have a function of converting an HD DVD-VR content into an interoperable content compatible with the HD DVD-Video format, and recording the interoperable content. In this way, the HD DVD-Video player can play back the interoperable content recorded by the HD DVD-VR recorder.

When data in this interoperable content format is frequently generated and recorded, the disc capacity of a write once medium is reduced accordingly. In a rewritable medium, the number of rewritable times of the medium is reduced. In the interoperable content format, files are encrypted by an AACS (advanced access content system), and can be written out onto a medium. However, which of a plurality of recorded files are used as those for the interoperable content cannot be determined unless a playlist, markup file, script file, and the like are analyzed. For this reason, it is difficult to search for files for the interoperable content and files encrypted by the AACS. As a result, it is difficult to manage key information of AACS for the entire medium.

The AACS will be described below.

Upon adopting this AACS, a set vendor of a player acquires a specific key set from a key matrix of a licensee, encrypts different combinations of keys, and embeds them in individual players.

With this AACS, each of a plurality of title keys is encrypted using a device key assigned to each recorder/player such as a DVD recorder or the like, which rightfully records or plays back a content, and a random number generated randomly. The encrypted title key is registered in a title key file together with the random number, and is recorded on a DVD medium. Upon playing back a title content, the encrypted title key registered in the title key file is decrypted using the random number and the device key of the recorder/player which is used to play back the title content, and the title content is decrypted using the decrypted title key, thus playing back the title content.

In the conventional CPRM scheme, an encryption key is generated using a media key block (MKB) included in a disc, and a media ID, and a content is encrypted using that encryption key. On the other hand, with the AACS, a content in a disc is encrypted using an encryption key for each content in place of a common encryption key.

A single medium can store a maximum of 1998 video objects (VOBs) as contents of the MPEG2 format or the like used in the conventional DVD, and a maximum of 1998 stream objects used in HDDV or the like in terms of the format.

As described above, the conventional scheme uses one encryption key for all these objects. However, the AACS encrypts data using different encryption keys for respective contents.

The encryption keys for respective contents are stored in a title key file (TKF). That is, a title key file for video objects and that for stream objects are assured, and each title key file can store 1998 encrypted title keys (E-TK).

Upon generating an interoperable content, this embodiment solves the aforementioned problems by writing management information used to manage files for the generated interoperable content.

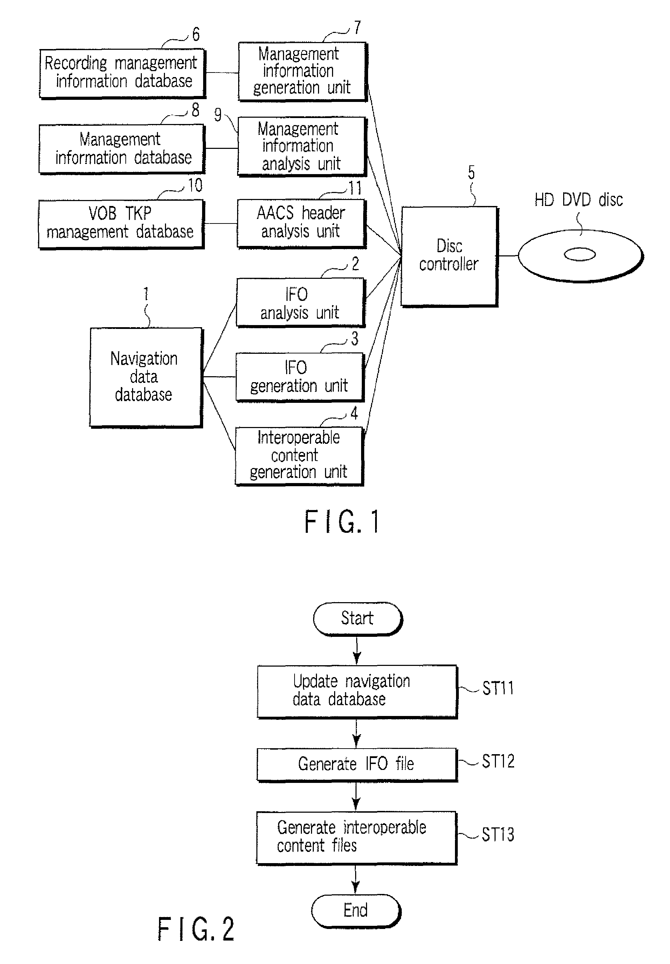

FIG. 1 shows an example of a schematic arrangement of a recorder (information recording apparatus) that records an interoperable content. Note that FIG. 1 also shows a player (information playback apparatus) that plays back an interoperable content. As shown in FIG. 1, the recorder comprises a navigation data database 1, IFO analysis unit 2, IFO generation unit 3, interoperable content generation unit 4, disc controller 5, recording management information database 6, management information generation unit 7, management information database 8, management information analysis unit 9, VOB TKP database 10, and AACS header analysis unit 11.

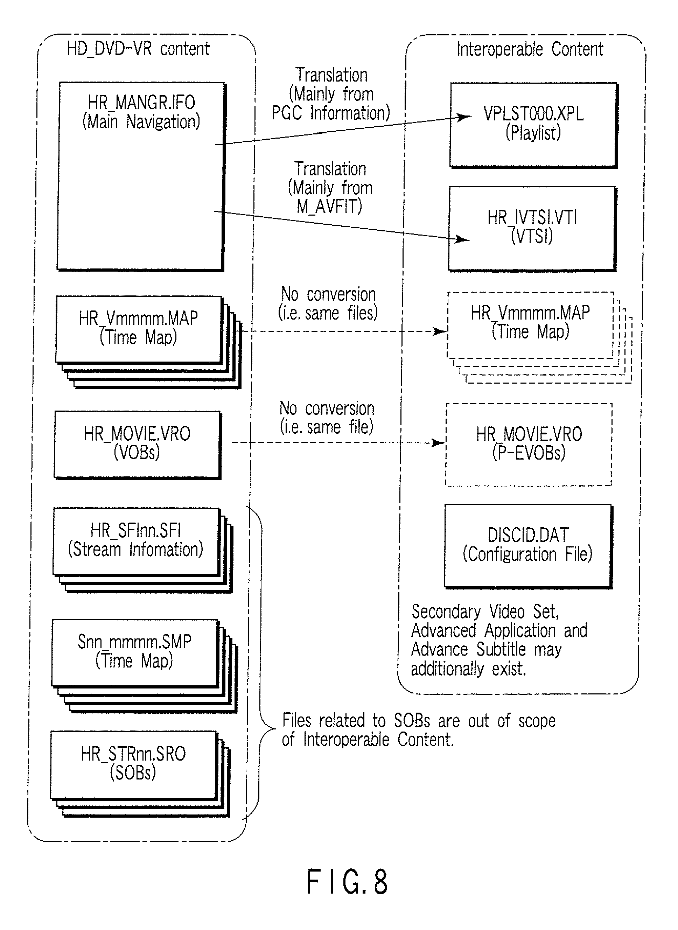

The generation processing of an interoperable content by the recorder shown in FIG. 1 will be described below. FIG. 8 shows the relationship between the HD DVD-VR content and interoperable content. FIG. 2 is a flowchart showing a first generation example of an interoperable content.

The recorder shown in FIG. 1 records, for an interoperable content, at least:
- a configuration file;
- a playlist file; and
- a video title set information (VTSI) file
in addition to files recorded in the HD-VR format.

Also, image files and font files need be recorded upon generating a content which displays menus using markup files.

The playlist file is information indicating the configurations and the like of a title and chapters including VOBs (video objects). The VTSI file is information indicating attributes and the like of VOBs.

When an HD DVD-VR disc is inserted into the recorder, the disc controller 5 of the recorder starts read and write accesses of data with respect to the inserted disc. As a result, the IFO analysis unit 2 analyzes an HR_MANGR.IFO file (to be referred to as an IFO file hereinafter) as navigation data recorded on the disc. The navigation data navigates playback of VOBs (video objects) and SOBs (stream objects) included in an HD DVD-VR content. The analysis result of the navigation data is stored in the navigation data database 1.

After that, when the user makes video recording and edit operations on the disc, the navigation data database 1 updates the contents of the navigation data database in response to these operations (ST11). The IFO generation unit 3 generates an IFO file based on information of the updated navigation data database (ST12). The disc controller 5 records the generated IFO file on the disc.

The interoperable content generation unit 4 generates files (configuration file, playlist file, and video title set information file) for an interoperable content (ST13), and the disc controller 5 records the generated files on the disc. Note that time map data and VOBs (video objects) which are included in the HD DVD-VR content are respectively handled as time map data and P-EVOBs (primary enhanced video objects) in the interoperable content without being converted. As described above, the interoperable content include the time map data and P-EVOBs in addition to the configuration file, playlist file, and video title set information file.

When files are recorded in the above sequence, no information difference is generated between the IFO file and the files for the interoperable content.

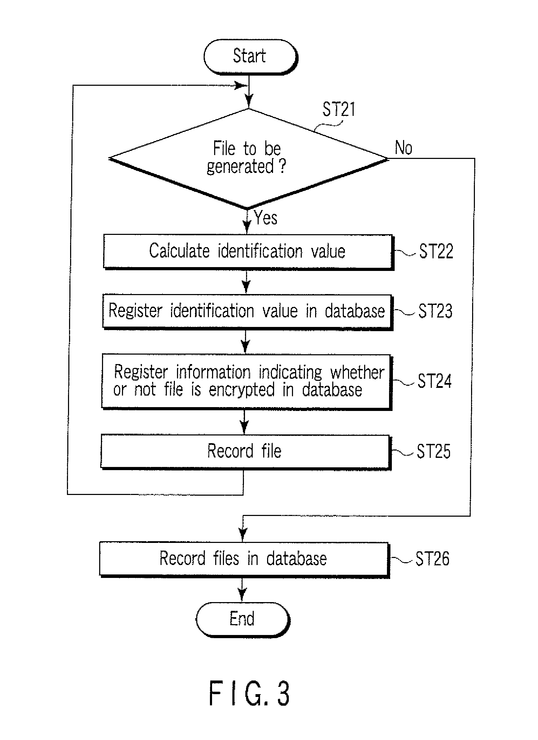

A method of generating management information upon recording the interoperable content will be described below. FIG. 3 is a flowchart showing generation of management information.

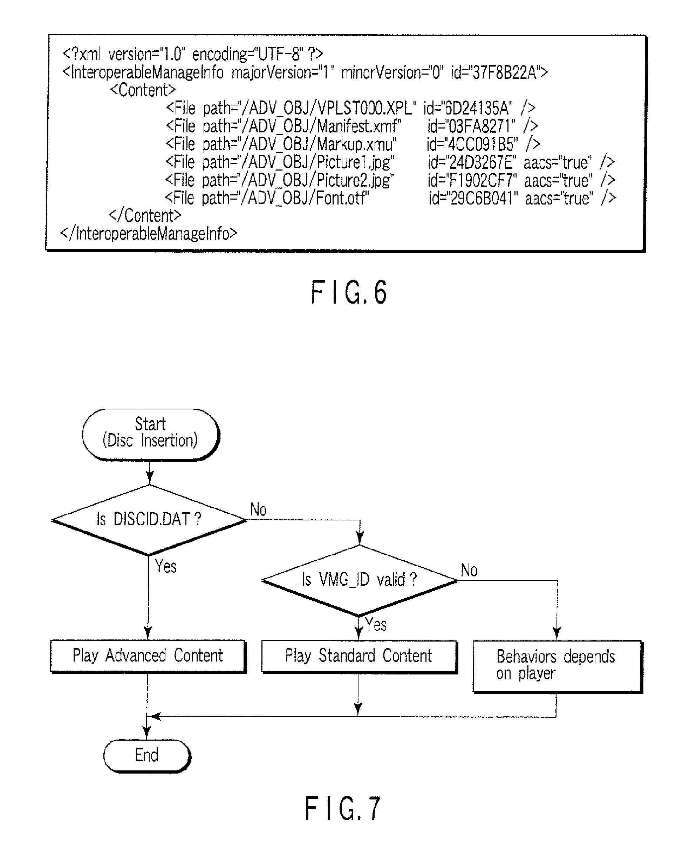

The recorder calculates an identification value used to identify a file before it writes the file for the interoperable content on the disc (ST22). Such identification value is generated in advance based on a Hash function or the like, or is generated upon writing. Files having the same contents have the same identification value. The recorder stores a path on the file system where the file is recorded and the identification value in the recording management information database 6 (ST23). Note that, for example, id = "6D24135A" in management information shown in FIG. 6 or the like is the identification value.

When the file is to be encrypted by the AACS, the recorder stores a path on the file system where that file is recorded and flag information indicating that the file is encrypted in the recording management information database 6 (ST24). Note that aacs = "true" in the management information shown in FIG. 6 is the flag information.

After the aforementioned processes have been done for all the files for the interoperable content (NO in ST21), the management information generation unit 7 records information in the recording management database 6 at a predetermined file path in an XML (extensible markup language) format (ST26). FIG. 6 shows an example of management information generated by the aforementioned management information generation processing.

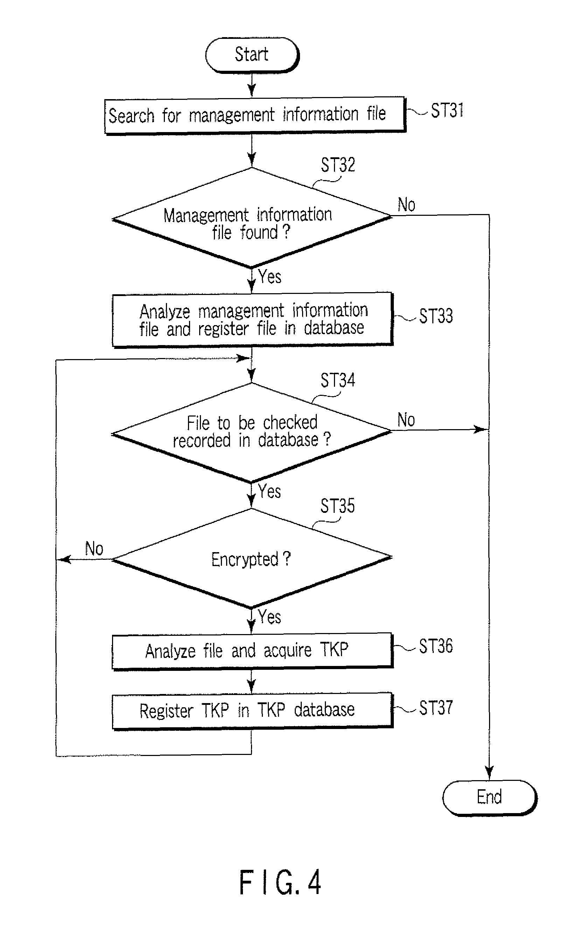

Operations executed when the disc that records this management information is inserted into the recorder will be described below. FIG. 4 is a flowchart showing an example of the management information read processing.

The recorder checks if the management information is recorded at the predetermined file path (ST31). If the management information is recorded (YES in ST32), the management information analysis unit 9 analyzes the management information, and stores it in the management information database 8 (ST33).

After that, the management information database is searched (ST34). As for a file encrypted by the AACS (YES in ST35), the AACS header analysis unit 11 analyzes that file to acquire a Title Key Pointer (to be abbreviated as TKP hereinafter) (ST36). The acquired TKP is stored in the VOB TKP management database 10 (ST37).

This is because an encryption key for the interoperable content is used from an encryption key group used to encrypt VOBs in the HD DVD-VR format. The above processes are done for all the files.

A TKP used for each VOB in the HD DVD-VR format is separately analyzed and is managed in the VOB TKP management database 10.

With the above operation, the TKP used for each VOB in the HD DVD-VR format and that used in the interoperable content are managed by one VOB TKP management database 10. As a result, a search for an unused TKP upon encrypting a new file, an unused state of a TKP after deletion of a file, and the like can be easily managed.

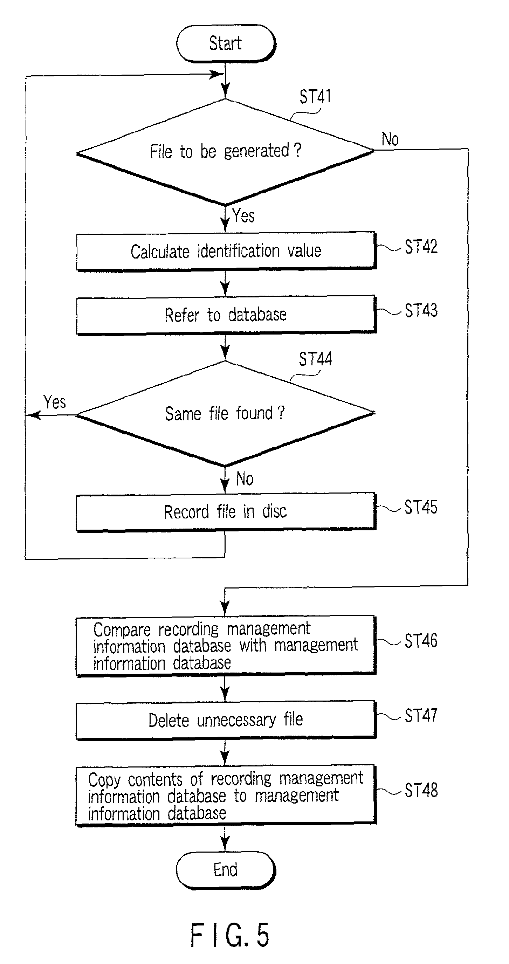

A method of preventing wasteful overwrite of files and a method of deleting unwanted files upon recording the files for the interoperable content will be described below. FIG. 5 is a flowchart showing an example of the method of preventing wasteful overwrite of files and the method of deleting an unnecessary file.

Upon writing out a file for the interoperable content, the identification value of that file is calculated (ST42). It is then checked if the management information database 8 includes a file whose file phase and identifier match those of the file to be written (ST43).

If that file has already been stored (YES in ST44), since the file need not be written out, the write access is aborted. In this way, wasteful file overwrite can be avoided.

After all the files are recorded (NO in ST41), the recording management information database 6 and management information database 8 are compared (ST46). A file which is stored in the management database 8 but is not stored in the recording management database 6 is determined as an unnecessary file. Therefore, by deleting this file (ST47), a wasteful area can be eliminated from the disc. Finally, the contents of the recording management information database 6 are copied to the management information database 8 (ST48).

As described above, since the management information of the files for the interoperable content is recorded on the disc upon generating the interoperable content, file management is facilitated.

The playback processing by the player (FIG. 1) that plays back HD DVD-Video discs will be briefly described below. The player refers to a configuration file (= DISCID.DAT) recorded on a disc so as to determine what content is recorded in the disc, as shown in FIG. 7. If this configuration file is found, it is determined that the recorded content is an advanced content or interoperable content; otherwise, it is determined that the recorded content is a content other than the advanced content or interoperable content.

Assume that the configuration file is not deleted from the disc first upon generating files for the interoperable content. In this case, if the generation is interrupted due to an electric power failure or the like during generation of files for the interoperable content, the configuration file remains stored in that disc. That is, when such disc is inserted into the player, since it includes the configuration file, a content recorded on that disc is determined as an advanced content or interoperable content due to the presence of the configuration file, and related files are then referred to. However, the disc may store both old files before generation of the files for the interoperable content and new files after generation, or may store a file in the middle of generation. Upon referring to such files, the player may make an error or may find inconsistency in them.

On the other hand, if the configuration file is deleted from the disc first upon generating files for the interoperable content, even when the file generation is interrupted due to an electric power failure or the like, that disc does not store the configuration file. That is, even when such disc is inserted into the player, it does not store any configuration file. Hence, the content recorded on this disc is not determined as an interoperable content. Hence, inconsistent files are not referred to.

For the same reason as above, the generated configuration file is finally written in the disc after the generated interoperable content is written in the disc.

As described above, upon generating the interoperable content, files can be generated without any inconsistencies with the navigation data in the HD DVD-VR format or in the interoperable content.

Points of this embodiment will be summarized below.
(1) A recorder/player which records information on an HD DVD medium in the HD DVD-VR format has a function of generating navigation data specified in the HD DVD-VR format and an interoperable content. Furthermore, the recorder/player has a function of recording management information used to manage files for the interoperable content as files on the medium upon generating the interoperable content.
(2) In addition, the management information recorded by the recorder/player includes identification values used to identify the files for the interoperable content.
(3) In addition, the management information recorded by the recorder/player includes encryption information indicating whether or not the files for the interoperable content are encrypted by the AACS.
(4) In addition, the management information recorded by the recorder/player is described in the XML format.
(5) In addition, the recorder/player has a function of analyzing the management information read out from the medium.
(6) In addition, the recorder/player has a determination unit which compares values used to identify files recorded in the management information upon generating the interoperable content, and values used to identify files to be generated. If the determination unit determines that a file to be generated has already been stored in the media, generation of that file is skipped.
(7) In addition, the recorder/player has a management unit which manages key information of the AACS, and also an analysis unit which analyzes key information of a file based on the encryption information indicating whether or not the file is encrypted by the AACS. The management unit manages the key information analyzed by this analysis unit.
(8) In addition, the recorder/player has a determination unit which compares file information recorded in the management information and file information to be generated, and has a function of deleting a file recorded in the management information when that file is no longer used.

An additional explanation will be given below about the interoperable content.

The interoperable content is defined to allow an HD OVD-Video player to play back an HD DVD-VR content on a disc.

The interoperable content is a subset of an advanced content defined in the HD DVD-Video format except for some definitions related to video objects.

Some parameters or functions related to video objects are not supported in video objects of an advanced content in the HD DVD-Video format. However, if an HD DVD-Video player has a function of playing back the interoperable content, it supports these parameters or functions. Therefore, video objects for the HD DVD-VR content are normally used as those for the interoperable content without being converted.

Navigation data of the interoperable content is a subset of navigation data of an advanced content in the HD DVD-Video format. Therefore, navigation data of an HD DVD-VR content is converted into that of the interoperable content. The navigation data supported for the interoperable content especially does not have restrictions as long as it conforms to the format of an advanced content in the HD DVD-Video format.

An example of the method of converting the navigation data is as follows.

Generation of the interoperable content is an optional function of the recorder. When the recorder supports generation of the interoperable content, conversion rules are applied.

The basic concept of conversion from the HD DVD-VR content into the interoperable content will be explained below. The interoperable content is mostly a subset of an advanced content except for some differences. The interoperable content includes at least one playlist, one primary video set (called an interoperable VTS), and one configuration file. The primary video set (i.e., interoperable VTS) further includes video title set information (VTSI), video title set time map information (VTSJTMAP), and primary enhanced video objects (P-VOBs).

Furthermore, the interoperable content may include a secondary video set, advanced application, and advanced subtitle defined in the advanced content.

In order to attain playback as the interoperable content, the disc must include the playlist, VTSI, VTS_TMAP, P-EVOBs, and configuration file. The VTS_TMAP is equivalent to VTMAP defined in the HD DVD-VR format. Also, a P-EVOB is equivalent to a VOB defined in the HD DVD-VR format. Therefore, an HD DVD-Video player can use time map files and VOB files defined in the HD DVD-VR format without any conversion processing. Hence, in order to attain playback as interoperable content by the HD DVD-Video player, one VTSI file, one playlist file, and one configuration file must further be generated.

FIG. 8 shows the basic concept of the relationship among the conversion processing, HD DVD-VR content, and interoperable content. The VTSI is generated mainly based on information of an M_AVFIT (especially, M_VOB_STIs and M_VOBIs) in an HR_MANGR.IFO file. The playlist is generated mainly based on information of PGC information (i.e., ORG_PGCI and UD_PGCIs) in the HR_MANGR.IFO file. The contents of the configuration file are permanent in case of the interoperable content. The interoperable content does not include any navigation file related to the stream object file and the stream object file.

Rules associated with directories and files will be described below.

Upon generation of the interoperable content, the following rules are applied.
- The playlist file is allocated under an "ADV_OBJ" directory present immediately below the root directory.
- The file name of the playlist is determined as "VPTST000.XPL" for the interoperable content.
- As in the time map files and VOB file, the VTSI file is also allocated under a "DVD HDVR/HDVR VOB" directory.
- The file name of the VTSI is determined as "HR_IVTSI.VTI" for the interoperable content.
- As defined in the HD DVD-Video format, the file names of the time map files and VOB file are respectively "HR_Vmmmm.MAP" (mmmm: 0001 to 1998) and "HR_MOVIE.VRO.
- The configuration file is allocated under the "ADV_OBJ" directory present immediately below the root directory.
- The file name of the configuration file is determined as "DISCID.DAT" in the HD DVD-Video format.
- When the disc includes at least one of the VTSI (HR_IVTSI.VTI), playlist (VPLST000.XPL), and configuration file (DISCID.DAT), it includes all these files, which match each other. Furthermore, these files match the time map files (HR_Vmmmm.MAP) and VOB file (HR_MOVIE.VRO). When the HD DVD-VR content is updated and influences the corresponding VTSI or playlist, a recorder which cannot update the VTSI and playlist deletes the VTSI, playlist, and configuration file. In this case, the "ADV_OBJ" directory need not be deleted.

Details of generation of the VTSI will be described below.

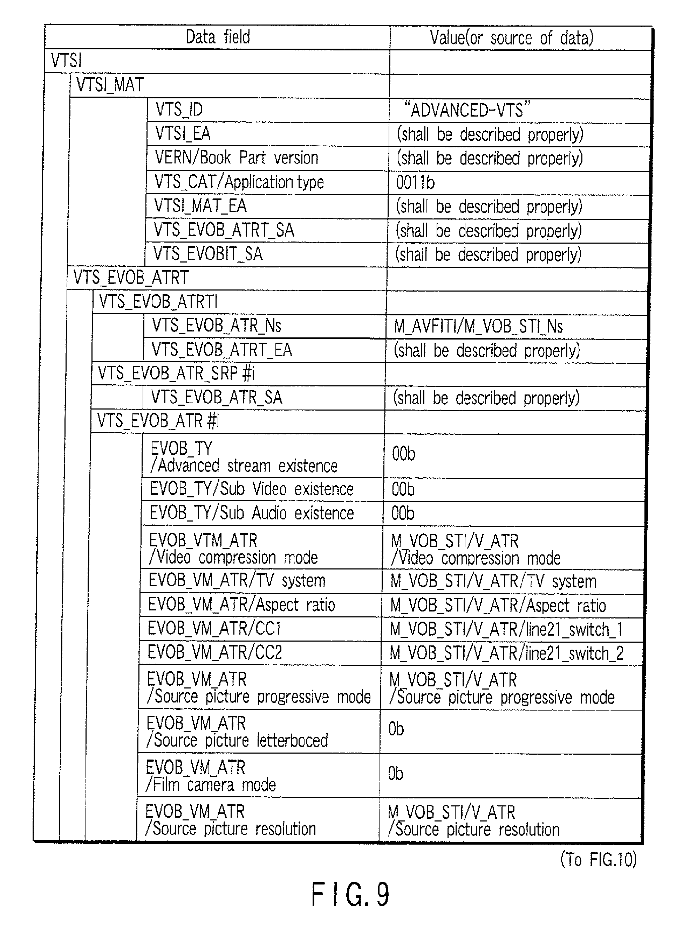

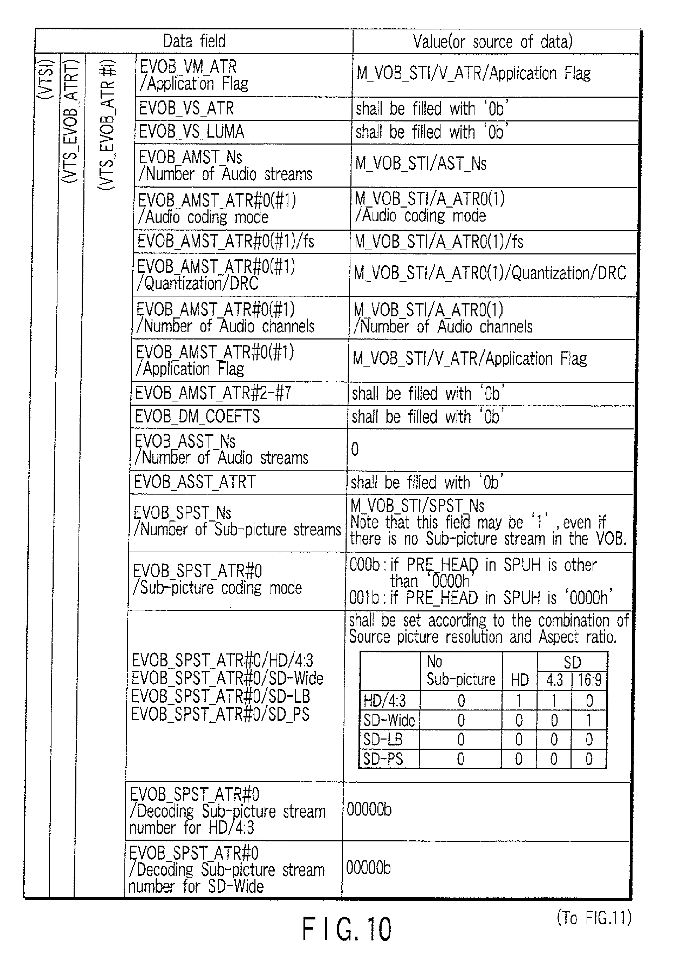

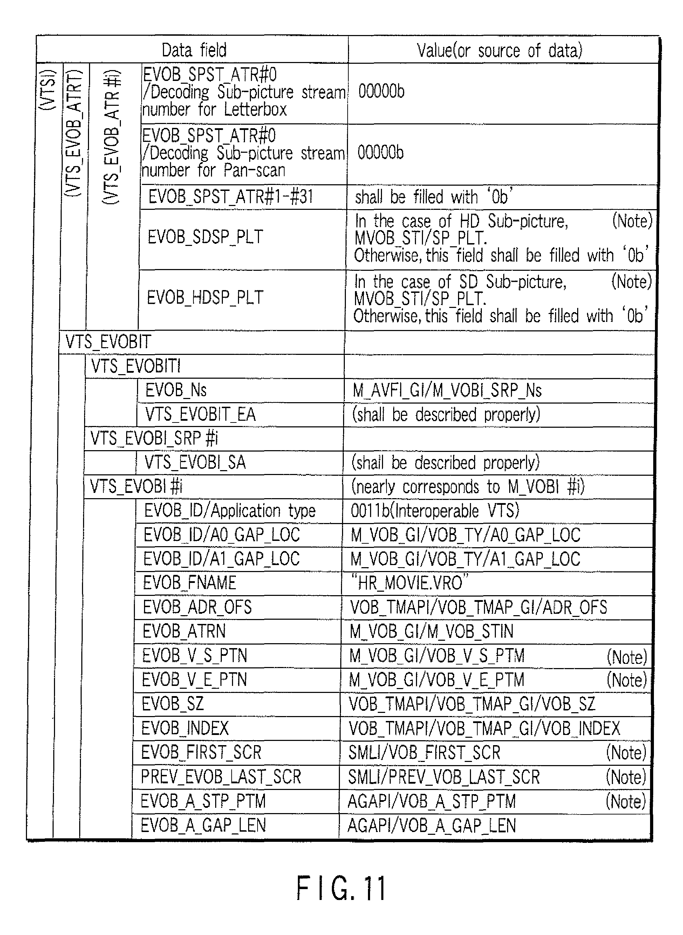

Upon generation of the interoperable content, one VTSI file "HR IVTSI.VTI" is generated. FIGS. 9, 10, and 11 show an overview of values to be filled in data fields of the VTSI for the interoperable content. Note that FIGS. 9 to 11 are a series of tables.

Information in VTS_EVOB_ATR is mainly copied or extracted from corresponding M_VOB_STI. Information in VTS_EVOBI is mainly copied or extracted from corresponding M VOBI.

Details of generation of the playlist will be explained below.

Upon generation of the interoperable content, one playlist file "VPLST000.XPL" is generated.

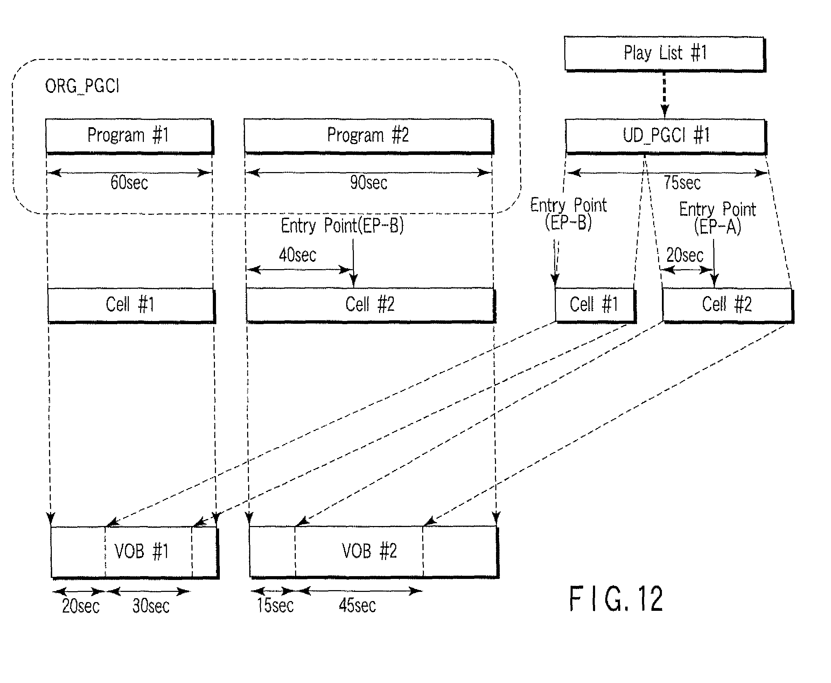

In order to explain generation of the playlist, a simple example of the HD DVD-VR content will be assumed. FIG. 12 shows conversion from the HD DVD-VR content into the interoperable content.

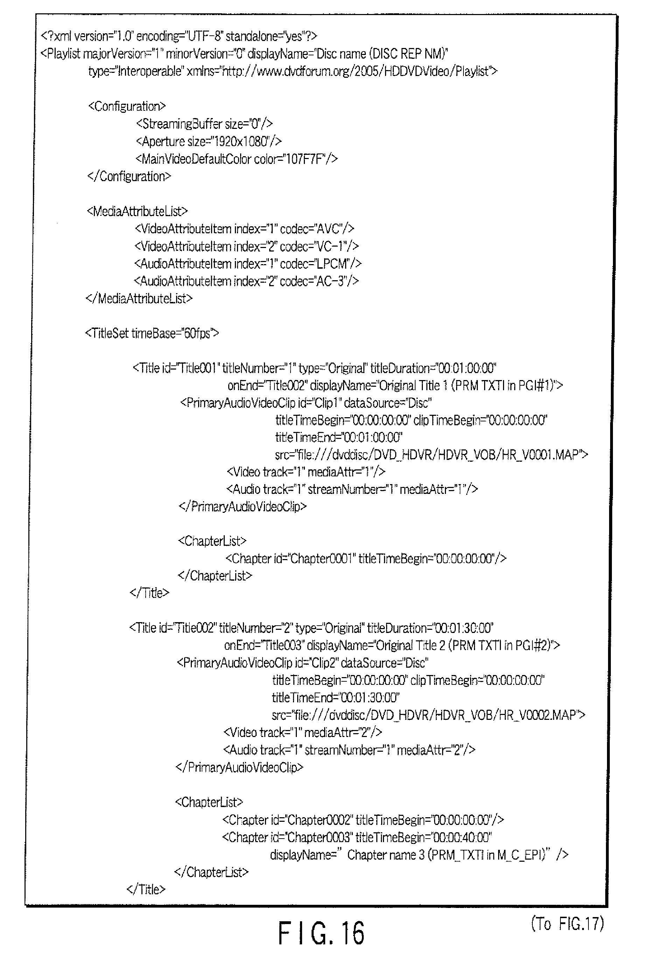

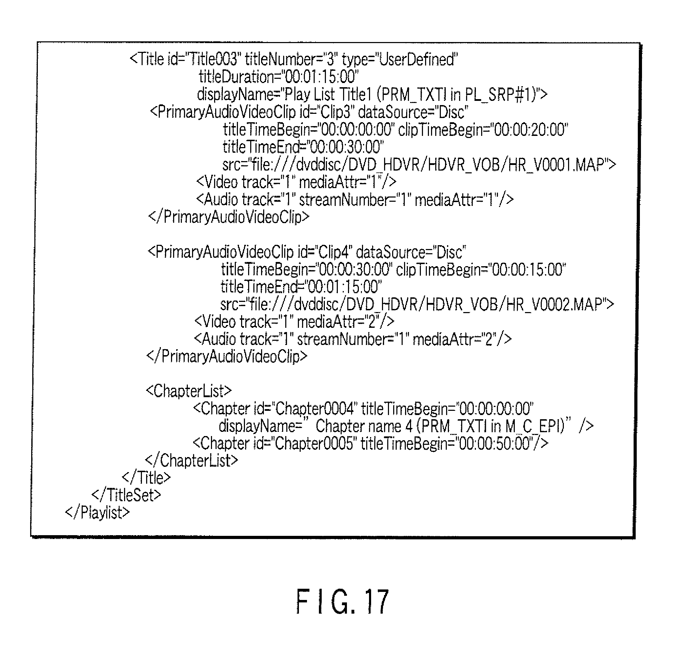

FIGS. 16 and 17 show an example of a playlist generated from the HD DVD-VR content shown in FIG. 12.

The playlist for the interoperable content allows a flexible description. The playlist described in FIGS. 16 and 17 is an example, and is generated based on the following assumptions.
- One "title" corresponds to a program (PG) or playlist (PL) in the HD DVD-VR format.
- One "chapter" corresponds to an entry point (M_C_EPI) in the HD DVD-VR format. If there is no entry point at the beginning of the PG or PL, the chapter is always present at the head of the title.
- "Display name" in the playlist corresponds to a disc representative name (DISC_REP_NM) in the HD DVD-VR format.
- "Display name" in the title corresponds to primary text information (PRM_TXTI) of the PG or PL in the HD DVD-VR format.
- "Display name" in the chapter corresponds to primary text information (PRM_TXTI) of the entry point (Type EP-B) in the HD DVD-VR format.
- "Title time" in the title is obtained from C_V_S_PTM and C_V_E_PTM in the HD DVD-VR format.
- "titleTimeBegin" and "titleTimeEnd" in a primary audio video clip are obtained from C_V_S_PTM and VOB_V_S_PTM in the HD DVD-VR format.
- "clipTimeBegin" in the primary audio video clip is obtained from C_V_S_PTM and VOB_V_S_PTM in the HD DVD-VR format.
- "titleTimeBegin" in the chapter is obtained from EP_PTM C_V_S_PTM and C_V_E_PTMs in the HD DVD-VR format.
- In order to allow playback of all titles, an attribute "onEnd" of each title (except for the last title) designates the next title.

Details of generation of the configuration file will be described below.

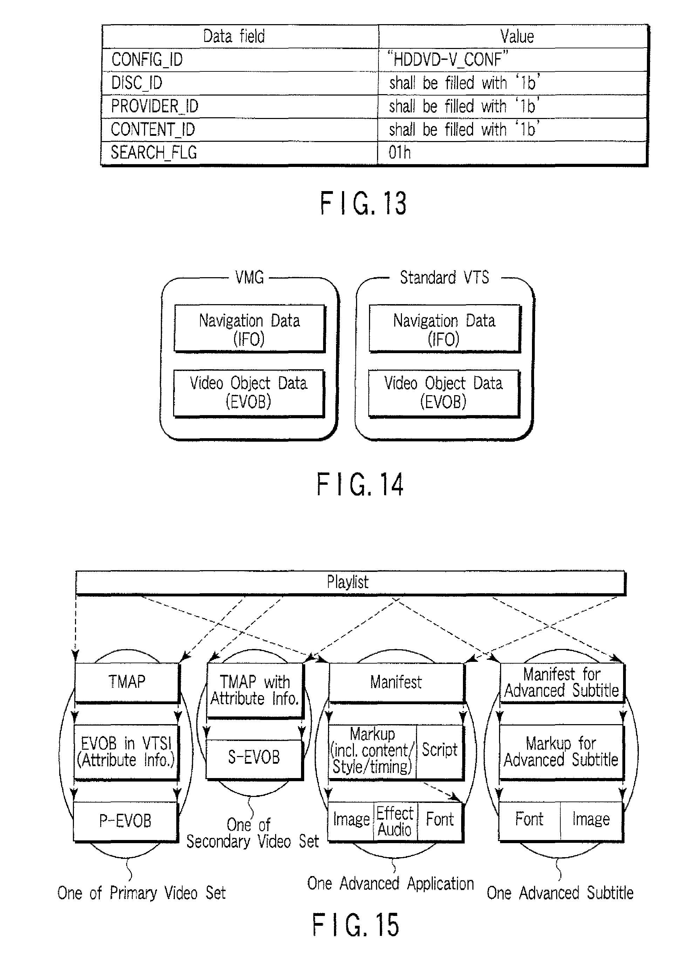

Upon generation of the interoperable content, one configuration file ("DISCID.DAT") is generated. FIG. 13 shows an overview of values to be filled in data fields of the configuration file for the interoperable content.

A few points to note in generation of the interoperable content will be described below.

Since SOBs (and navigation data associated with SOBs) fall outside the scope of the interoperable content, data structures such as STRA_CI and STRB_CI must be excluded from the conversion processing to the interoperable content. As a result, the total number of titles often becomes less than the sum total of all the programs (PGs) and playlists (PLs) of, e.g., the HD DVD-VR content.

Temporarily erased M_VOBs may not often be included in the interoperable content. In this case, the total number of P-EVOBs often becomes less than the total number of M VOBs.

In the above description, the navigation data of the interoperable content is assumed to be generated from that of the HD DVD-VR content by "conversion". However, an actual implementation method is not limited to the conversion processing. In some implementation methods, the VTSI, playlist, and configuration file may be generated before the disc is unloaded from the recorder. Alternatively, in another implementation method, when the HD DVD-VR content is modified by the recorder, the VTSI, playlist, and configuration file may be updated.

An additional explanation will be given below about contents.

As will be described below, two types of contents are defined. One is a standard content, and the other is an advanced content.

The standard content includes navigation data and video object data on a disc. The advanced content includes advanced navigation files such as a playlist file, manifest file, markup file, and script file, and advanced data such as a primary video set/secondary video set, and advanced elements (image, audio, text, and the like). At least one playlist and primary video set are recorded in the disc including the advanced content. Other data are recorded on the disc and can be transferred from a server. As shown in FIG. 14, the standard content basically includes one VMG space and one or more VTS spaces.

The advanced content implements more interactiveness by expanding audio and video implemented by the standard content. The advanced content includes:
- playlist
- primary video set
- secondary video set
- advanced application
- advanced subtitle

The playlist provides playback information in presentation objects described in FIG. 15. For example, in order to play back the primary video set, the player reads a TMAP file using a URI described in the playlist, interprets EVOBI with reference to the TMAP, and accesses an appropriate P-EVOB defined by the EVOBI.

The playlist file is described in XML, and one or more playlist files are allocated on the disc. The player interprets the playlist file first to play back the advanced content. The playlist file includes:
- object mapping information
- track number assignment information
- track navigation information
- resource information
- playback sequence information
- system configuration information
- scheduled control information

The advanced application includes one manifest file, markup file (including content/style/timing/layout information), script file, image file, effect audio file, font file, and other files.

## Claims

1. An information recording apparatus, which converts an HD DVD Video Recording (HD DVD-VR) content recorded in an HD DVD-VR format into an interoperable content compatible with an HD DVD-Video format and records the interoperable content, **characterized by** comprising:
an analysis unit (1, 2) configured to analyze navigation data included in the HD DVD-VR content;
a generation unit (3, 4) configured to generate a playlist file and a video title set information file based on the navigation data, and to generate the interoperable content which includes the playlist file, the video title set information file, and a title including video objects included in the HD DVD-VR content; and
a recording unit (5) configured to record the interoperable content generated by the generation unit at a predetermined recording location,
wherein the generation unit generates management information used to manage files for the interoperable content,
the recording unit records the management information generated by the generation unit at the predetermined recording location,
the navigation data included in the HD DVD-VR content navigates playback of the video objects and stream objects included in the HD DVD-VR content,
the playlist file included in the interoperable content indicates the configuration of the title and chapters for the interoperable content, and
the video title set information included in the interoperable content indicates attributes of the video objects included in the interoperable content.

2. The apparatus according to claim 1, **characterized in that** the generation unit generates the management information including identification values used to identify files for the interoperable content.

3. The apparatus according to claim 1, **characterized in that** the generation unit generates the management information including encryption information indicating whether or not files for the interoperable content are encrypted by an AACS (advanced access content system).

4. The apparatus according to claim 1, **characterized in that** the generation unit generates the management information described in an XML (extensible markup language) format.

5. The apparatus according to claim 1, which further comprises:
a recording control unit (5) configured to analyze the recorded management information recorded at the predetermined recording location, to compare an identification value used to identify a file included in the recorded management information with an identification value of a file to be recorded for the interoperable content, to check based on the comparison result whether or not the file to be recorded for the interoperable content is recorded at the predetermined recording location, and to record the file to be recorded for the interoperable content based on the checking result.

6. The apparatus according to claim 3, which further comprises:
a management unit (8, 9) configured to analyze key information of the AACS based on the encryption information included in the management information, and to manage the analyzed key information.

7. The apparatus according to claim 1, which further comprises:
a delete unit (8, 9) configured to delete a file which is not used of files included in the management information.

8. An information playback apparatus **characterized by** comprising:
a read unit (5) configured to read a configuration file and management information used to manage files for an interoperable content compatible with an HD DVD-Video format from a predetermined recording location; and
a playback unit (5) configured to play back the interoperable content from the predetermined recording location based on the configuration file and the management information read by the read unit.

9. An information recording apparatus for converting a video recording first content into an interoperable second content and for recording the interoperable second content, comprising:
an analysis unit (1, 2) configured to analyze navigation data included in the video recording first content;
a generation unit (3, 4) configured to generate a playlist file and a video title set information file based on the navigation data, and to generate the interoperable second content which includes the playlist file, the video title set information file, and a title including video objects included in the video recording first content; and
a recording unit (5) configured to record the interoperable second content generated by the generation unit at a predetermined recording location,
wherein the generation unit generates management information used to manage files for the interoperable second content,
the recording unit records the management information generated by the generation unit at the predetermined recording location,
the navigation data included in the video recording first content navigates playback of video objects and stream objects included in the video recording first content,
the playlist file included in the interoperable content indicates the configuration of the title and chapters for the interoperable second content, and
the video title set information included in the interoperable second content indicates attributes of the video objects included in the interoperable second content.
